# EUROPEAN PATENT SPECIFICATION

(11) **EP 4 035 862 B1**
(45) Date of publication and mention of the grant of the patent: **03.04.2024**
(21) Application number: 21153976.2
(22) Date of filing: 28.01.2021
(51) Int. Cl.: B29C 33/00, B29C 70/30

(54) **A MOULD ASSEMBLY FOR MANUFACTURING A WIND TURBINE BLADE SHELL PART**
FORMENANORDNUNG ZUR HERSTELLUNG EINES SCHALENTEILS EINER WINDTURBINENSCHAUFEL
ENSEMBLE DE MOULE POUR LA FABRICATION D'UNE PARTIE DE COQUE DE PALE D'ÉOLIENNE

(43) Date of publication of application: 03.08.2022
(73) Proprietor: LM Wind Power A/S, 6000 Kolding (DK)
(72) Inventor: IVERSEN, Morten Dall, 6000 Kolding (DK); BARSLEV, Henrik, 6000 Kolding (DK)
(74) Representative: COPA Copenhagen Patents

(56) References cited:
- EP-A1- 3 711 938
- WO-A1-2013/113817
- WO-A1-2013/113962
- WO-A1-2014/191046
- AU-B3- 665 511
- Anonym ET AL: "REPHASING TYPE CUSTOM WELDED HYDRAULIC CYLINDERS For Working Pressures to 5000 PSIG (345 Bar)", , 1 January 2011 (2011-01-01), pages 1-4, XP055814363, Retrieved from the Internet: URL:http://www.energymfg.com/pdf/broch_rep hasecyl.pdf [retrieved on 2021-06-16]

## Description

### Field of the Invention

The present invention relates to a mould assembly for manufacturing a wind turbine blade shell part, and to a method of manufacturing a wind turbine blade shell part.

### Background of the invention

Wind power provides a clean and environmentally friendly source of energy. Wind turbines usually comprise a tower, generator, gearbox, nacelle, and one or more rotor blades. The wind turbine blades capture kinetic energy of wind using known airfoil principles. Modern wind turbines may have rotor blades that exceed 90 meters in length.

Wind turbine blades are usually manufactured by forming two shell parts or shell halves from layers or plies of woven fabric or fibre and resin. Spar caps or main laminates are placed or integrated in the shell halves and may be combined with shear webs or spar beams to form structural support members. Spar caps or main laminates may be joined to, or integrated within, the inside of the suction and pressure halves of the shell.

The aerodynamic shell parts are typically made by use of Vacuum Assisted Resin Transfer Moulding (VARTM), wherein a plurality of fibre mats are arranged on top of rigid mould parts along with core material to provide parts having a sandwich structure. When the fibre mats have been stacked and overlapped so as to form the final shape of the wind turbine blade shell part, a flexible vacuum bag is arranged on top of the fibre mats and sealed against the rigid mould part, thereby forming a mould cavity containing the fibre mats. Resin inlets and vacuum outlets are connected to the mould cavity. First the mould cavity is evacuated via the vacuum outlets to create negative pressure in the mould cavity, after which a supply of liquid resin is supplied via the resin inlets. The resin is forced into the mould cavity due to the pressure differential and impregnates the fibre material of the fibre mats. When the fibre material has been fully impregnated, the resin is cured in order to form the final composite structure, i.e. the wind turbine shell part.

From WO 2014/191046 A1 it is known to provide shell halves of a wind turbine blade with a root end insert comprising a plurality of fastening members which are embedded between outer fibre layers and inner fibre layers of the shell. These fastening members are accessible from the root end of the shell part so that the wind turbine blade may be mounted to the hub of a wind turbine. In this process, a mounting plate can be used to facilitate integration of the fastening members, wherein a plurality of bushings are provided on the mounting plate, alternating with wedge-shaped inserts. After completing the manufacturing process, the mounting plate of the root end assembly can be removed, and the remaining part constitutes a root end insert for attachment to the hub.

However, a correct alignment and arrangement of the root end insert fastened to the mounting plate can be challenging. Even slight deviations in the angle and position relative to the fibre layers may result in undesired displacement of the glass fabric, thereby causing wrinkle formation and/or bending within the blade shell laminate. Also, gaps may form between the tips of the wedge-shaped inserts and the fibre layers if the root end insert is placed at an incorrect angle. This may give rise to costly repair operations.

It is therefore an object of the present invention to provide an improved moulding assembly which overcomes the above-described problems.

It is another object of the present invention to provide a more efficient process of manufacturing blade shell parts with root end inserts, which reduces the amount of undesired repair operations.

### Summary of the invention

It has been found that one or more of the aforementioned objects can be obtained by a mould assembly for manufacturing a wind turbine blade shell part, the mould assembly comprising a mould having a moulding surface that defines the outer shape of the wind turbine blade shell part, the mould having a longitudinal direction extending between a tip end and a root end of the mould, wherein the mould assembly comprises a lowering device, which is adapted to carry and lower a root end insert onto the moulding surface of the mould, the lowering device being attached to the mould and comprising a frame for carrying the root end insert, wherein the lowering device further comprises driving means for lowering the frame together with the root end insert, the driving means comprising two synchronized hydraulic cylinders, each hydraulic cylinder comprising a piston chamber and a rod chamber, wherein the piston chamber and the rod chamber of each cylinder are connected to each other via a respective valve assembly comprising a fluid line and a valve.

It was found that this arrangement results in a significant reduction of wrinkle formation, and reduced necessity and cost of repair operations. By using the valve assembly of the present invention, an efficient way of resetting the position of the cylinder pistons is provided, which allows the operator to correct for any observed inaccuracies or loss of cylinder synchronization during the lowering of the root insert. By opening the valve of the valve assembly, hydraulic fluid is allowed to flow back to the other chamber of the cylinder thus resetting the piston position. The synchronized movement of the cylinders allows for a correct and efficient placement of the root insert on the fibre layers or plies.

Using the mould assembly of the present invention, a root end insert that has been separately prepared may be lowered and arranged very precisely onto the moulding surface. Further, the lowering process can to a high degree be carried out without human involvement. By using an automatic, synchronized lowering device it is ensured that the root end insert is lowered into the mould every time such a root end insert is being mounted.

The wind turbine blade shell part is preferably a blade shell half, such as a pressure side shell half or a suction side shell half, each shell half having a trailing edge and an opposing leading edge, as well as a root end and an opposing tip end. The mould typically comprises a support structure, such as a frame, for receiving a moulding surface that defines the outer shape of the wind turbine blade shell part. The mould having a longitudinal direction extending between a tip end and a root end of the mould, and usually trailing edge side and a leading edge side.

The mould assembly comprises a lowering device, which is adapted to carry and lower a root end insert onto the moulding surface of the mould. The lowering device is attached to the mould and comprises a frame for carrying the root end insert. The frame is preferably provided with carrying means for carrying the root end insert. This provides a simple solution for arranging and carrying the root end insert on the frame of the lowering device. The carrying means may for instance be hooks that are adapted to receive pins or rods from the root end insert. The root end insert or the mounting plate of the root end assembly may thus rest on the hooks.

The root end insert may comprise a plurality of fastening members, such as bushings. The fastening members are preferably accessible from the end of the wind turbine blade shell so that the fastening members in the final wind turbine blade can be used to mount the root end of the wind turbine blade to the hub of a wind turbine. The root end insert further advantageously comprises a number of intermediate inserts arranged between fastening members, said inserts preferably comprising a wedge-shaped section for being arranged in between upper and lower fibre layers or plies of the shell part. Thereby, the fastening members and the inserts may together form a root end insert that is embedded in the entire cross-section, thus forming a circular insert in the finished wind turbine blade shell. The intermediate inserts and the fastening members preferably comprise lateral sides that abut each other.

The lowering device may advantageously be attached on the sides of the mould, preferably with one of the hydraulic cylinders being arranged at either side, i.e. one cylinder at the trailing edge side and the other cylinder at the leading edge side. This ensures that the lowering device is always aligned in the same way relative to the mould, in turn ensuring that the root end insert is lowered onto the moulding surface in the same way every time.

According to an advantageous embodiment, the lowering device is adapted to lower the root end insert in a two-step motion, where the root end insert in a first motion step is lowered onto the moulding surface while the root end insert is angled upwards in the longitudinal direction until a first end of the root end insert contacts a part of the moulding surface at the root end, and where the root end insert in a second motion step is tilted until the root end insert rests on the moulding surface. Thereby, the lowering device may lower the root end insert onto the moulding surface without wrinkling or otherwise distorting fibre material, such as fibre mats, that have been laid up on the moulding surface prior to arranging the root end insert in the mould.

The root end insert is in the second motion step rotated substantially about the first end of the root end insert or the part that after the first motion step contacts the part of the moulding surface at the root end. Advantageously, the lowering device comprises a frame for carrying the root end insert and a driving means for lowering the frame together with root end insert. This provides for a simple solution, where the root end insert or root end assembly may be arranged on the frame, and where the driving means facilitate the lowering motion, where the root end insert is arranged on the moulding surface.

According to an advantageous embodiment, the lowering device comprises at least a pair of guiding pins or rollers and mating guiding slots provided on the frame. The mating connection between the guiding pins and the guiding slots may thus ensure that the root end insert follows the correct motion when it is lowered onto the moulding surface. The guiding slots may advantageously comprise a front guiding slot and a rear guiding slot, wherein the slots are shaped so that rear guide in the first motion lowers a rear part of the frame faster than the front guiding slot lowers a front part of the frame. Thereby the frame will be both lowered and tilted during the first motion step, thus tilting the root end insert upwards as seen in the longitudinal direction of the mould.

In one advantageous embodiment, the slots are shaped so that the front guide in the second motion lowers the front part of the frame faster than the rear guiding slot lowers the rear part of the frame. Thus, the guiding slots are shaped so as to provide the rotating motion of the second motion step.

The driving means comprises two synchronized hydraulic cylinders, each hydraulic cylinder comprising a piston chamber and a rod chamber. It is preferred that the hydraulic cylinders are double acting hydraulic cylinders. In a preferred embodiment, the two synchronized double acting hydraulic cylinders are arranged at opposite sides of the mould, such as at a trailing edge side and a leading edge side of the mould. In one embodiment, the hydraulic cylinders are telescopic cylinders. In another embodiment, the hydraulic cylinders are double acting, double rod end cylinders. In preferred embodiment, the hydraulic cylinders are connected in series. In another embodiment, the hydraulic cylinders are connected in parallel.

The two hydraulic cylinders are advantageously configured to pull the root end insert, preferably a mounting plate to which the root end insert is fixed, toward the moulding surface of the mould. In a preferred embodiment, the cylinder rods are connected to respective engaging members, such as hooks, for receiving a mating member, such as a pin, of the root end insert mounting plate. Thus, the cylinders are preferably configured to pull the root end insert from the root end towards, above and onto the moulding surface.

The piston chamber and the rod chamber of the first hydraulic cylinder are connected to each other via a first valve assembly comprising a fluid line and a valve, the valve assembly allowing for fluid communication between both chambers of the cylinder. Likewise, the piston chamber and the rod chamber of the second hydraulic cylinder are connected to each other via a second valve assembly comprising a fluid line and a valve. In a preferred embodiment, the valve of each valve assembly is a two-way valve, preferably a two-way ball valve. Thus, when the valve is opened fluid connection between both chambers can be established. This allows for backflow of hydraulic fluid to the less pressurized chamber, thus enabling a swift and simple way of resetting the piston position of one or preferably both of the cylinders.

In a preferred embodiment, each of the piston chamber and the rod chamber comprise a respective fluid port, and wherein each valve assembly further comprises a first fitting at the first end of the fluid line, and a second fitting at the second end of the fluid line, the first and second fittings being connected to the respective fluid ports of the hydraulic cylinder.

In a preferred embodiment, the first fitting further comprises a hydraulic pressure test point coupling for bleeding air from the hydraulic cylinder. The test point coupling may provide for an efficient way of letting air escape the cylinder that has become trapped inside the cylinder. In a preferred embodiment, the first fitting and the second fitting are banjo fittings. Preferably, the respective fluid ports of the hydraulic cylinder are located at an upper edge of the respective cylinder.

In a preferred embodiment, the first fitting comprises a banjo bolt with an internal thread, and wherein the hydraulic pressure test point coupling is fastened to the first fitting via said internal thread. Advantageously, the test point coupling comprises an external thread that can be screwed into the internal thread of the banjo bolt.

In a preferred embodiment, the lowering device is adapted to lower the root end insert in a two-step motion using the pulling force of the hydraulic cylinders, wherein the root end insert in a first motion step is lowered onto the moulding surface while the root end insert is angled upwards in the longitudinal direction until a first end of the root end insert contacts a part of the moulding surface at the root end, and where the root end insert in a second motion step is tilted until the root end insert rests on the moulding surface. This can be achieved by providing the frame of the lowering device with appropriately shaped slots, for example with an angled shape, within which guiding rollers of the lowering device are arranged. When the cylinders pull the root insert towards the mould, the guiding rollers can move within the angled slots of the frame, thus creating the desired two-step motion.

In a preferred embodiment, the lowering device comprises at least a pair of guiding pins or rollers and mating guiding slots provided on the frame. The frame and the root end insert may be lowered onto the moulding surface of the mould via guiding slots and guiding pins or rollers. In a preferred embodiment, the frame is provided with hooks that are adapted to receive pins from the root end insert.

In another aspect, the present invention relates to a method of manufacturing a wind turbine blade shell part, wherein the wind turbine blade shell part is manufactured as a composite structure comprising a fibre-reinforcement material embedded in a polymer matrix, and wherein the wind turbine blade shell part is provided with a root end insert that, when manufactured, is accessible from a root end of the wind turbine shell part, and wherein the wind turbine blade shell part is manufactured with the mould assembly according to the present invention, wherein the method comprises the steps of:
a) arranging the root end insert on the lowering device of the mould assembly, and
b) lowering the root end insert onto the moulding surface of the mould using the lowering device.

This ensures that a root end insert that has been separately prepared may be lowered and arranged very precisely onto the moulding surface. Further, the lowering process can to a high degree be carried out without human involvement. By using an automatic, synchronized lowering device it is ensured that the root end insert is lowered into the mould every time such a root end insert is being mounted. Safety is also increased, as there is no manual operation for fixing the root plate, while the root end insert is being carried by a carrying device, such as a crane.

Synchronization of the two hydraulic cylinders of the mould assembly may be achieved by connecting the hydraulic cylinders in hydraulic series or tandem. Thus, as hydraulic fluid under pump pressure is supplied to one end of the first cylinder, the second cylinder will be equally operated by the oil which is ejected from the first cylinder.

In a preferred embodiment, the method comprises, prior to or during step b), opening the valve of each valve assembly to reset the piston position of the respective hydraulic cylinders, and subsequently closing the valves.

In a preferred embodiment, the method further comprises bleeding air from the hydraulic cylinder using the pressure test point coupling.

In a preferred embodiment, step b) is carried out in two motions steps, wherein
b1) the root end insert in a first motion step is lowered onto the moulding surface while the root end insert is angled upwards in the longitudinal direction until a first end of the root end insert contacts a part of the moulding surface at the root end, and
b2) the root end insert in a second motion step is tilted until the root end insert rests on the moulding surface. Thereby, the root end insert may be lowered onto the moulding surface without wrinkling or otherwise distorting fibre material, such as fibre mats, that have been laid up on the moulding surface prior to arranging the root end insert in the mould. The root end insert is in the second motion step rotated substantially about the first end of the root end insert or the part that after the first motion step contacts the part of the moulding surface at the root end.

In a preferred embodiment, the root end insert prior to step a) is arranged on a mounting plate, and wherein the root end insert is arranged on the lowering device via the mounting plate. The mounting plate together with the root end insert form a root end assembly. In one embodiment, the mounting plate is provided with attachment devices for attaching the mounting plate to the lowering device. The attachment devices may for instance be pins that may mate or rest on hooks provided on the lowering device. In practice, the root end insert may be arranged on a mounting plate, the mounting plate and the root end insert together forming a root end assembly. The root end insert is then arranged in the mould by providing the root end assembly on the lowering device and lowering it into the mould. The mounting plate may then later, e.g. after moulding, be removed.

Thus, the method may be carried out using a root end assembly comprising a mounting plate comprising a first side and a second side, and a plurality of fastening members, such as bushing, mounted to the first side of the mounting plate so that the fastening members extend substantially normal to first side of the mounting plate, wherein the mounting plate is adapted to be removed, when the root end assembly has been mounted in a wind turbine blade shell part.

According to an advantageous embodiment, the assembly further comprise wedges arranged in longitudinal extension of the fastening members, alternatively the wedges being provided with a tapering part proximal to the mounting plate. Similarly, the inserts may comprise a tapering part proximal to the mounting plate. The wedges or tapering parts may thus provide for a gradual stiffness transition in the longitudinal direction of the finished wind turbine blade shell.

According to another advantageous embodiment, the mounting plate on the first side comprises recesses or notches, and a proximal end of the fastening members are arranged in said recesses or notches. The recesses may assist in ensuring that the fastening members are arranged correctly on the mounting plate, e.g. ensuring that the fastening members extend along a normal to a plane of the mounting plate. The recesses are preferably disposed along a circular path or semi-circular path on the mounting plate so that the fastening members are arranged along a circular cross section of the wind turbine blade shell part.

According to yet another advantageous embodiment, the mounting plate further comprises a number of holes, wherein the fastening members are attached to the mounting plate by stay bolts that have been inserted from the second side of the mounting plate and through the holes. Thus, the holes are preferably also disposed along a circular path. Preferably, the holes are aligned with the recesses on the first side of the mounting plate.

The mounting plate may remain on the root end of the wind turbine blade shell part after the manufacture of the shell part and only be removed prior to instalment on the wind turbine hub. Thereby, the rigid mounting plate ensures that the root end of the blade does not deform during storage. In manufacturing methods, where the blade shell is manufactured via two or more blade shell parts, such as the suction side shell part and the pressure side shell part, the mounting plate may also remain attached to the blade shell parts during the step, where the blade shell parts are glued to each other. When the mounting plate of the root end assembly has been removed, the remaining part constitutes a root end insert.

In a preferred embodiment, the root end insert comprises a plurality of fastening members, such as bushings, and wherein the root end insert further comprises a number of intermediate inserts arranged between fastening members. In a preferred embodiment, the intermediate inserts comprise a tapered part or wedge part. The fastening members are advantageously in the final composite structure of the shell part embedded between the outer fibre layer(s)/plies and the inner fibre layer(s)/plies. The fastening members are preferably accessible from the root end of the shell part so that the wind turbine blade may be mounted to the hub of a wind turbine.

According to a preferred embodiment, the fastening members are bushings. The bushings are arranged so that the opening of the bushings are accessible from the root end of the blade shell so that the final wind turbine blade may be mounted to the hub of a wind turbine by use of stay bolts inserted into the openings of the bushings.

According to an advantageous embodiment, the bushings are mounted on the mounting plate by use of stay bolts. The mounting plate may be provided with openings for the stay bolt to be inserted through, so that the bushings are mounted on a first side of the mounting plate, and the stay bolts are inserted through said openings and attached to the bushing from a second, opposite side of the mounting plate. The mounting plate may be removed from the root end by first demounting the stay bolts and then removing the mounting plate from the root end of the blade shell part.

According to another advantageous embodiment, the mounting plate is provided with guiding recesses for insertion of one end of the fastening members. This ensures correct alignment and orientation of the fastening members. In yet another advantageous embodiment, the preparation of the root end assembly further comprises the step of mounting intermediate inserts between the fastening members. The intermediate inserts may for instance be retaining inserts, such as butterfly wedges, which retain the fastening members and further ensures that the fastening members are arranged with the correct mutual spacing. In practice, the fastening members and the inserts may be arranged on the root end assembly by alternately arranging the fastening member and the inserts, preferably along a circular or semi-circular path on the mounting plate.

The intermediate inserts may advantageously be made of a fibre-reinforced composite structure, e.g. a fibre pultrusion comprising pultruded glass fibres or carbon fibres. In one embodiment, fibre material is wrapped around the fastening members. The fibre material may advantageously be non-woven fibre material, such as glass wool.

The fastening members are typically made of a metal, such as cast iron or stainless steel, and by wrapping fibre material, e.g. glass fibres, around the fastening members, it is ensured that the fastening members are properly bonded to the inner and outer fibre layers/plies.

In one advantageous embodiment, a wedge is arranged in longitudinal extension of the fastening member. The wedge may for instance be made of foamed polymer or balsawood. The wedge is arranged so that it has the thickest part proximal to the end of the fastening member, and the thin part distal to the end of the fastening member. This ensures that the root end assembly has a gradual transition to the outer and inner fibre layers, in turn ensuring that the blade root does not have a steep or discontinuous stiffness transition.

The wedge may be wrapped in the fibre material together with the fastening member so that the two parts may be arranged on the mounting plate together. The wedge may also in principle be integrally formed with the fastening member.

In another advantageous embodiment, the intermediate inserts comprise a tapered part or wedge part. The tapered part of the insert may preferably be aligned with the wedge arranged in longitudinal extension of the fastening member. Thereby, the two parts together ensure a gradual stiffness transition in the composite structure of the shell part.

A fibre material may advantageously be weaved between the wedges of the fastening members and the wedge part of the inserts. This can be done by weaving the fibre material under the butterfly wedges and over the fastening member wedges or vice versa. The fibre material may for instance be triaxial glass fibre mats.

In yet another advantageous embodiment, a fibre layer, such as a fibre mat, is wrapped around the plurality of fastening members and the optional inserts prior to the root end assembly being arranged in the mould. The fibre layer may for instance be a triaxial fibre mat comprising glass fibres.

Further, a number of fibre bands may be arranged on top of the wedges in order to a proper alignment of the end parts of the edges and a proper draping of the fibre material, thus ensuring a proper transition to the inner and outer fibre layers without wrinkles forming in the laminate.

In a preferred embodiment, the method, prior to step a), comprises the step of arranging one or more outer fibre layers on the moulding surface, the one or more outer fibre layers defining an outer surface of the wind turbine blade shell part. In a preferred embodiment, the method additionally comprises the step of arranging one or more inner fibre layers on top of the root end insert. Thereby, the root end insert is sandwiched between the inner fibre layer(s) and outer fibre layer(s). The outer fibre layer(s) may advantageously comprise biaxial fibre mats. The inner fibre layer(s) may advantageously comprise triaxial fibre mats.

In a preferred embodiment, the method after step b) comprises the steps of supplying a polymer to the outer and inner fibre layers, and allowing the polymer to cure so as to form the composite structure. The root end insert is thus embedded in the composite structure, thus providing a strong attachment part for mounting the final wind turbine blade to the hub of a wind turbine.

According to another aspect, the invention relates to a use of the mould assembly for manufacturing a wind turbine blade shell part made of a composite structure comprising a fibre-reinforcement material embedded in a polymer matrix, comprising the steps of: a) arranging one or more outer fibre layers on a mould surface, the one or more outer fibre layers defining an outer surface of the wind turbine blade shell part, b) mounting a plurality of fastening devices on a mounting plate so as to form a root end assembly, c) arranging the root end assembly on top of the one or more outer fibre layers at a root end section of the mould, using the hydraulic cylinders of the mould assembly, d) arranging one or more inner fibre layers on top of the root end assembly, e) supplying a polymer to the outer and inner fibre layers, f) allowing the polymer to cure so as to form the composite structure, and removing the mounting plate.

Thus, the fastening devices or bushings may be arranged on the mounting plate, and all the bushings may then be arranged correctly on the fibre layers on the mould. This also speeds up the manufacturing process, since all the fastening members may be arranged on the fibre material in one step, and since fibre layup in the mould and the preparation of root end assembly may be prepared in parallel.

All features and embodiments discussed above with respect to the mould assembly of the present invention likewise apply to the method of manufacturing a wind turbine blade shell part and to the valve assembly of the present invention, and vice versa.

### Detailed description of the figures

The invention is explained in detail below with reference to embodiments shown in the drawings, in which
Fig. 1 shows a wind turbine,
Fig. 2 shows a schematic view of a wind turbine blade,
Fig. 3 shows a schematic view of a cross-section of a wind turbine blade,
Fig. 4 shows a schematic view of a mould used for manufacturing a wind turbine blade shell part,
Figs. 5 and 6 show schematic views of a known mounting plate for mounting a root end insert,
Fig. 7 is a schematic side view of a known mould provided with a lowering device,
Fig. 8 is a schematic cross sectional view illustrating a distal point of a wedge shape insert arranged between upper and lower fibre layers,
Fig. 9 shows a mould assembly according to the present invention, as seen from the root end,
Fig. 10 is a partial perspective view of the mould assembly of Fig. 9,
Fig. 11 is a partial side view of the mould assembly of Fig. 9,
Fig. 12 is a perspective exploded view of a valve assembly according to the present invention, and
Fig. 13 is a hydraulic chart illustrating the interaction of the hydraulic cylinders and the valve assembly of the present invention.

### Detailed description of the figures

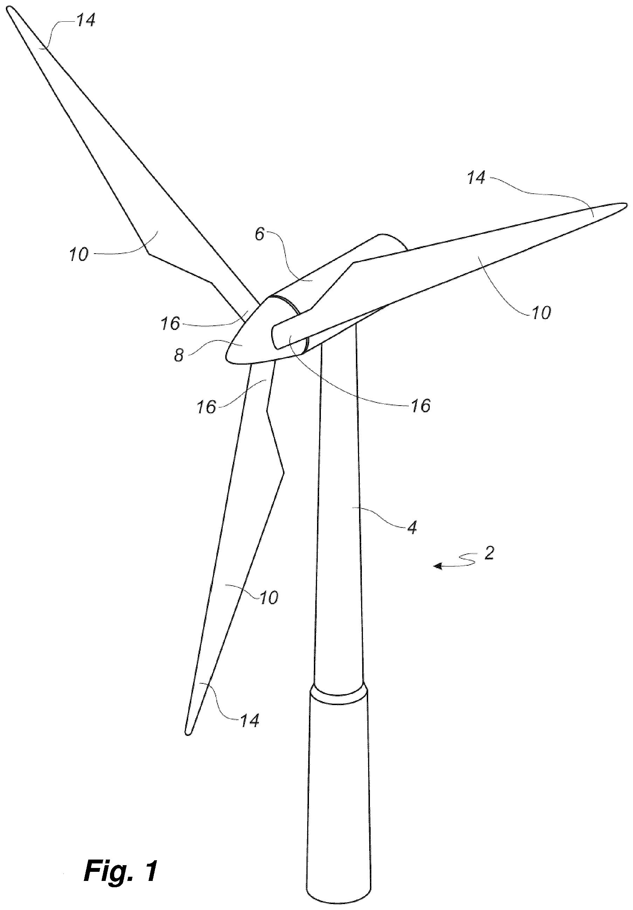

Fig. 1 illustrates a conventional modern upwind wind turbine according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 farthest from the hub 8. The rotor has a radius denoted R.

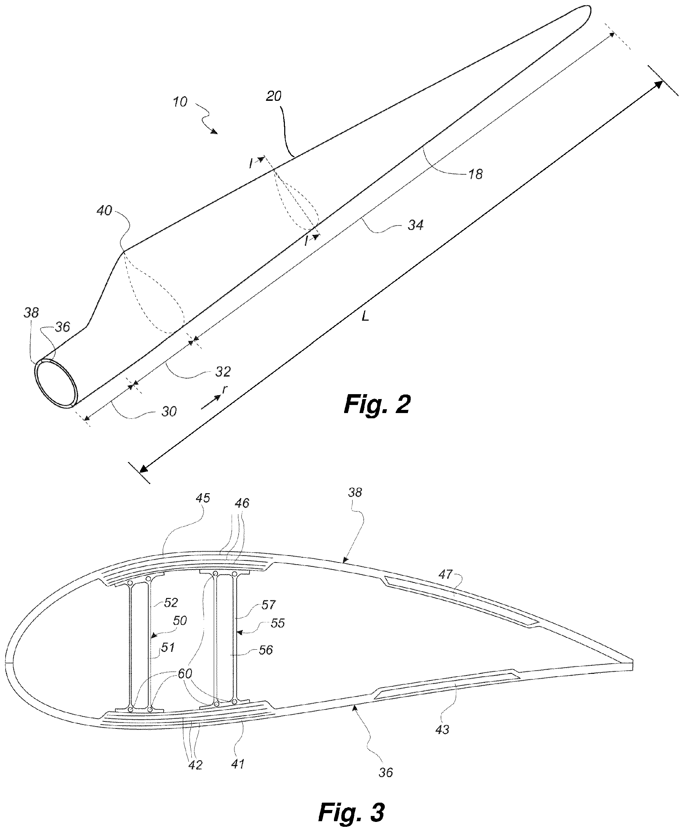

Fig. 2 shows a schematic view of a wind turbine blade 10. The wind turbine blade 10 has the shape of a conventional wind turbine blade and comprises a root region 30 closest to the hub, a profiled or an airfoil region 34 farthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 may be constant along the entire root area 30. The transition region 32 has a transitional profile gradually changing from the circular or elliptical shape of the root region 30 to the airfoil profile of the airfoil region 34. The chord length of the transition region 32 typically increases with increasing distance rfrom the hub. The airfoil region 34 has an airfoil profile with a chord extending between the leading edge 18 and the trailing edge 20 of the blade 10. The width of the chord decreases with increasing distance rfrom the hub.

A shoulder 40 of the blade 10 is defined as the position, where the blade 10 has its largest chord length. The shoulder 40 is typically provided at the boundary between the transition region 32 and the airfoil region 34. Fig. 2 also illustrates the longitudinal extent L, length or longitudinal axis of the blade.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub.

The blade is typically made from a pressure side shell part 36 and a suction side shell part 38 that are glued to each other along bond lines at the leading edge 18 and the trailing edge of the blade 20.

Fig. 3 shows a schematic view of a cross section of the blade along the line I-I shown in Fig. 2. As previously mentioned, the blade 10 comprises a pressure side shell part 36 and a suction side shell part 38. The pressure side shell part 36 comprises a spar cap 41, also called a main laminate, which constitutes a load bearing part of the pressure side shell part 36. The spar cap 41 comprises a plurality of fibre layers 42 mainly comprising unidirectional fibres aligned along the longitudinal direction of the blade in order to provide stiffness to the blade. The suction side shell part 38 also comprises a spar cap 45 comprising a plurality of fibre layers 46. The pressure side shell part 36 may also comprise a sandwich core material 43 typically made of balsawood or foamed polymer and sandwiched between a number of fibre-reinforced skin layers. The sandwich core material 43 is used to provide stiffness to the shell in order to ensure that the shell substantially maintains its aerodynamic profile during rotation of the blade. Similarly, the suction side shell part 38 may also comprise a sandwich core material 47.

The spar cap 41 of the pressure side shell part 36 and the spar cap 45 of the suction side shell part 38 are connected via a first shear web 50 and a second shear web 55. The shear webs 50, 55 are in the shown embodiment shaped as substantially I-shaped webs. The first shear web 50 comprises a shear web body and two web foot flanges. The shear web body comprises a sandwich core material 51, such as balsawood or foamed polymer, covered by a number of skin layers 52 made of a number of fibre layers. The blade shells 36, 38 may comprise further fibre-reinforcement at the leading edge and the trailing edge. Typically, the shell parts 36, 38 are bonded to each other via glue flanges.

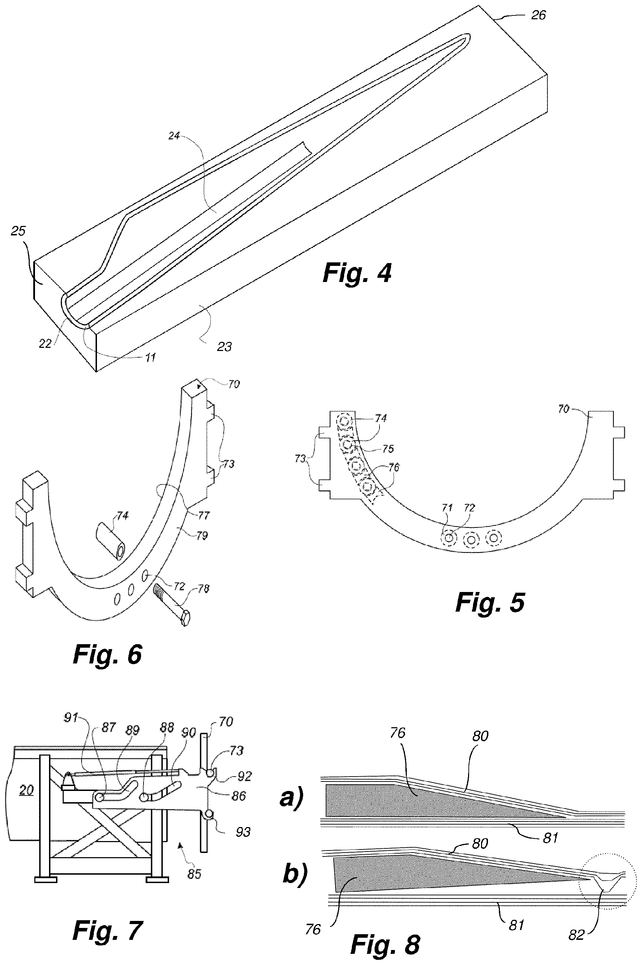

The wind turbine blades 10 are manufactured as fibre-reinforced composite structures comprising a fibre-reinforcement material embedded in a polymer matrix. The individual blades 10 comprise an aerodynamic shell, and the suction side and the pressure side of the aerodynamic shell are often manufactured as separate parts in moulds 23 as shown in Fig. 4. The blade shell parts 11 are manufactured separately by arranging the fibre-reinforcement material and typically also sandwich core material, such as foamed polymer or balsawood, on a mould surface 22 of the mould. The fibre reinforcement material is laid out as separate fibre mats 24 that are stacked overlapping on the mould surface 22. The load bearing structure of the blade 10 may be manufactured as a spar cap integrated in the blade shell, also called a main laminate, with shear webs arranged between the spar caps of the pressure side shell part and the suction side shell part. Alternatively, the load bearing structure may be formed as a spar or a beam, and the aerodynamic shell is adhered to the load bearing structure. The two blade shell parts are also glued to each other, e.g. by use of internal flange parts. The fibre mats 24 may be laid up manually on the mould surface 22 or by use of a fibre mat layup system, in which case the fibre mats 24 may be laid up automatically or semi-automatically.

Figs. 5 and 6 show a mounting plate 70 that is used to prepare a known root end insert for a shell part, the plate 70 comprising a number of fastening members in form of bushings 74 and retaining inserts in form of butterfly wedges 76 arranged between the bushings 74. The mounting plate 70 together with the root end insert form a root end assembly. The mounting plate 70 may be used for arranging the root end insert on the mould surface 22 of the mould 20 and may be removed afterwards and at least prior to instalment of the blade on a wind turbine hub.

The mounting plate 70 comprises a first side 77 and a second side 79. The mounting plate 70 is provided with a plurality of recesses 71 provided on the first side 77 of the mounting plate 70 and a plurality of through-going bores 72 or holes. The bores 72 are centrally aligned with the recesses 71. In Figs. 5 and 6 only a few recesses 71 and bores 72 are shown. However, in practice they are arranged equidistantly along an entire semi-circle of the mounting plate 70. The bushings 74 are mounted in the recesses 71 of the mounting plate 70 by inserting ends of the bushings 74 in the recesses. The bushings 74 are provided with central bores having inner threads 75. The bushings 74 may thus be retained in the recesses by inserting stay bolts 78 from the second side of the mounting plate 70 and through the bores 72 of the mounting plate 70. The bushings will then extend from the first side 77 of the mounting plate and be oriented substantially normal to a plane of the mounting plate 70.

The root end insert may be prepared by first mounting a first bushing 74 on the mounting plat and then arranging a first insert 76 next to and abutting the first bushing. Afterwards a second bushing 74 is arranged next to the first insert 76 and a second insert 76 next to the second bushing 74. This procedure is then continued until bushings 74 and inserts 76 are arranged along the entire semi-circle on the mounting plate, e.g. by arranging bushings 74 and inserts 76 from left to right as illustrated in Fig. 5. The inserts 76 need not be arranged in recesses on the first side 77 of the mounting plate, but may be retained between the bushings 74 due to the butterfly shape of the inserts 76.

The mounting plate 70 is also provided with a number of protrusions 73, such as pins or rods, which extend from the side of the mounting plate 70. These protrusions 73 may be used as connecting parts for providing a mating connection to corresponding parts on a frame of a lowering device for arranging the root end insert on the surface 22 of the mould 20.

Fig. 7 illustrates a known lowering device 85 that may advantageously be attached to the sides of the mould 20. The lowering device 85 comprises a frame 86, which is provided with carrying means in form of hooks 93 that may engage the protrusions 73 of the mounting plate 70 such that the mounting plate is connected to or resting on the frame 86. The frame 86 comprises a front guiding slot 89 and a rear guiding slot 90, which engage a front guiding roller 87 and a rear guiding roller 88, respectively. The lowering device further comprises a driving means in form of a telescopic piston cylinder 91 that is connected between a stationary part of the lowering device 85 and the frame 86. The telescopic piston cylinder 91 may advantageously be hingedly connected to the stationary part and the frame 86. The guiding slots 89, 90 are shaped so that the frame 86 and therefore also the mounting plate 70 with the root end insert are moved according to a desired motion.

Fig. 7 shows the lowering device 85 in the mounting position, where the mounting plate 70 together with the root end insert are arranged on the frame 86 of the lowering device 85. The mounting plate 70 is mounted on the frame 86 in a substantially vertical orientation. When the telescopic piston cylinder 91 begins to retract the piston, the frame 86 is moved on the guiding rollers 87, 88 via the guiding slots 89, 90. As seen, the guiding slots each comprise a horizontal slot part and an angled slot part. The frame 86 can be lowered down towards the moulding surface 22 of the mould, while the frame 86 and mounting plate 70 are tilted so that the root end insert is angled upwards in the longitudinal direction of the mould (not shown). The lowering a tilting motion may continue until the root end insert substantially contacts the moulding surface 22 of mould 20, after which a second motion step wherein the frame 86 with mounting plate 70 and root end insert are pivoted until the mounting plate 86 is oriented arranged substantially vertically and the root end insert rests on the mould surface 22 of the mould 20 (not shown). Afterwards, a number of inner fibre layers can be arranged on top of the root end insert.

This is illustrated in Fig. 8a, which shows the distal end of a wedge-shaped insert, which is part of the overall root end insert, arranged in between upper and lower fibre layers. However, the known method of arranging the root end insert in the mould may result in undesired formation of wrinkles 82 if slight deviations from the correct placement angle and/or position occur (see Fig. 8b).

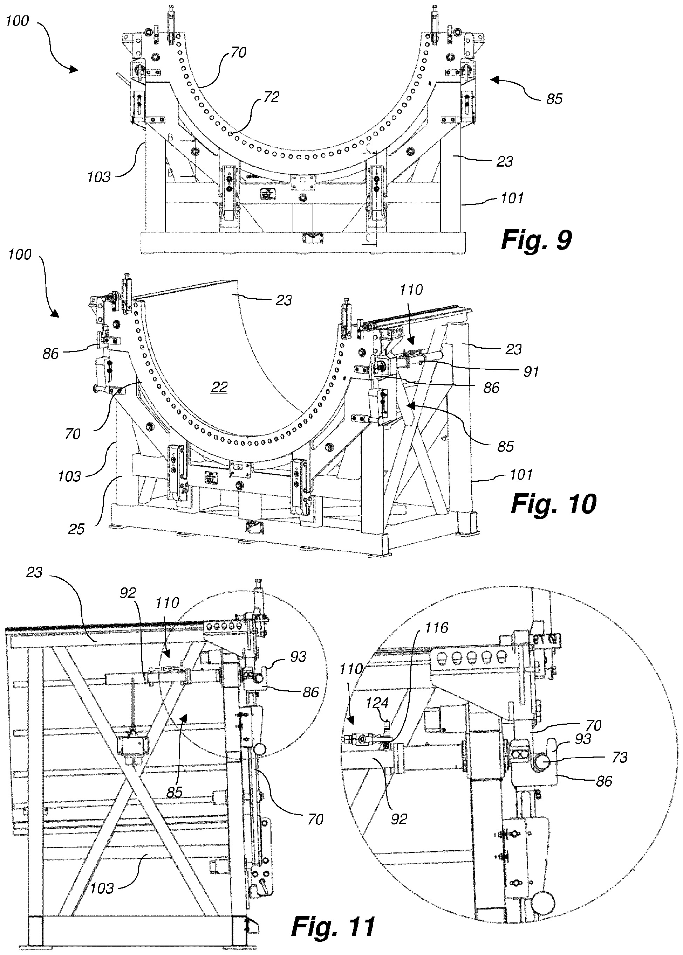

To address this issue, a mould assembly 100 as illustrated in Figs. 9-11 is provided. The mould assembly 100 for manufacturing a wind turbine blade shell part comprises a mould 23 having a moulding surface 22 that defines the outer shape of the wind turbine blade shell part, such as a shell half. The mould has a longitudinal direction extending between a tip end 26 and a root end 25 of the mould; see also Fig. 4. The mould assembly 100 comprises a lowering device 85, which is adapted to carry and lower a root end insert arranged on a mounting plate 70 onto the moulding surface of the mould. The lowering device 85 is attached to the mould 23 at a frame 27 of the mould.

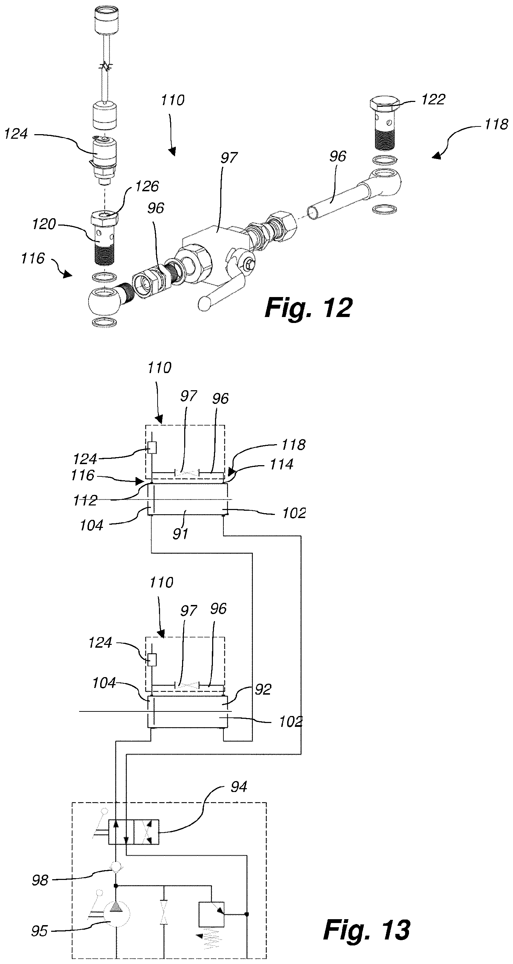

The lowering device comprises a frame 86 for carrying the root end insert, as well as two synchronized double acting cylinders 91, 92 for lowering the frame together with the root end insert. As seen in the hydraulic chart of Fig. 13, synchronization is provided by interconnected double-acting cylinders 91, 92 arranged in a hydraulic circuit operably connected to a hydraulic pump 95. Cylinders 91, 92 are connected in series, such that the outflow of cylinder 92 is the inflow of cylinder 91. As seen in Figs. 9-11, the two synchronized double acting hydraulic cylinders 91, 92 are arranged at opposite sides of the mould, i.e. at the trailing edge side and at the leading edge side of the mould.

Each hydraulic cylinder comprising a piston chamber 102 and a rod chamber 104, see Fig. 13, wherein the piston chamber and the rod chamber of each cylinder 91, 92 are connected to each other via a respective valve assembly 110. If an incorrect cylinder position or a lack of synchronisation of the two cylinders is observed, the arrangement of the present invention allows for opening the valve 97 of each valve assembly to reset the piston position of the respective hydraulic cylinders 91, 92, and subsequently closing the valves. Thus, one or both cylinder positions can be easily reset using the arrangement of the present invention.

A more detailed view of the valve assembly 110 is shown in Figure 12. The valve assembly 110 comprises a fluid line 96 and a valve 97, which preferably is a two-way valve, preferably a two-way ball valve. Each of the piston chamber 102 and the rod chamber 104 comprise a respective fluid port 112, 114, wherein each valve assembly further comprises a first fitting 116 at the first end of the fluid line, and a second fitting 118 at the second end of the fluid line 96, the first and second fittings 116, 118 being connected to the respective fluid ports 112, 114 of the hydraulic cylinder, as shown in Fig. 13. The first fitting 112 and the second fitting 114 are preferably banjo fittings comprising banjo bolts 120, 122.

In the embodiment illustrated in Fig. 12, the first fitting 116 further comprises a hydraulic pressure test point coupling 124 for bleeding air from the hydraulic cylinder. To this end, the first fitting 116 may comprise a banjo bolt 120 with an internal thread 126, wherein the hydraulic pressure test point coupling 124 is fastened to the first fitting 116 via said internal thread 126 of the banjo bolt 120. Integrating the test point coupling 124 allows for bleeding of air from at least one of the hydraulic cylinders using the pressure test point coupling if this is required.

The invention is not limited to the embodiments described herein and may be modified or adapted without departing from the scope of the present invention as defined in the appended claims.

### List of reference numerals

- 4: tower
- 6: nacelle
- 8: hub
- 10: blades
- 11: blade shell parts
- 14: blade tip
- 16: blade root
- 18: leading edge
- 20: trailing edge
- 22: mould surface
- 23: mould
- 24: fibre mats
- 25: root end of mould
- 26: tip end of mould
- 27: frame
- 30: root region
- 32: transition region
- 34: airfoil region
- 36: pressure side shell part
- 38: suction side shell part
- 40: shoulder
- 41: spar cap
- 42: fibre layers
- 43: sandwich core material
- 45: spar cap
- 46: fibre layers
- 47: sandwich core material
- 50: first shear web
- 51: core member
- 52: skin layers
- 55: second shear web
- 56: sandwich core material of second shear web
- 57: skin layers of second shear web
- 60: filler ropes
- 70: mounting plate
- 71: recess
- 72: bore / hole
- 73: protrusions / pins / rods
- 74: bushings / fastening means
- 75: central bore with inner thread
- 76: insert / butterfly wedge
- 77: first side of mounting plate
- 78: stay bolt
- 79: second side of mounting plate
- 80: upper fibre layers
- 81: lower fibre layers
- 82: wrinkle
- 85: lowering device
- 86: frame of lowering device
- 87: front guiding roller
- 88: rear guiding roller
- 89: front guiding slot
- 90: rear guiding slot
- 91: hydraulic cylinder
- 92: second hydraulic cylinder
- 93: hook
- 94: 4-way, 2-position control valve
- 95: hydraulic pump
- 96: hydraulic circuit
- 97: gate valve
- 98: check valve
- 100: mould assembly
- 101: leading edge side of mould
- 102: piston chamber
- 103: trailing edge side of mould
- 104: rod chamber
- 110: valve assembly
- 112: first port
- 114: second port
- 116: first fitting
- 118: second fitting
- 120: first banjo bolt
- 122: second banjo bolt
- 124: pressure test point coupling
- 126: internal thread
- L: length
- r: distance from hub
- R: rotor radius

## Claims

1. A mould assembly (100) for manufacturing a wind turbine blade shell part, the mould assembly (100) comprising a mould (23) having a moulding surface (22) that defines the outer shape of the wind turbine blade shell part, the mould having a longitudinal direction extending between a tip end (26) and a root end (25) of the mould, wherein the mould assembly (100) comprises a lowering device (85), which is adapted to carry and lower a root end insert onto the moulding surface of the mould, the lowering device (85) being attached to the mould and comprising a frame (86) for carrying the root end insert, wherein the lowering device (85) further comprises driving means for lowering the frame together with the root end insert, the driving means comprising two synchronized hydraulic cylinders (91, 92), each hydraulic cylinder comprising a piston chamber and a rod chamber, wherein the piston chamber and the rod chamber of each cylinder are connected to each other via a respective valve assembly (110) comprising a fluid line (96) and a valve (97).

2. A mould assembly (100) according to claim 1, wherein the valve (97) is a two-way valve, preferably a two-way ball valve.

3. A mould assembly (100) according to claims 1 or 2, wherein each of the piston chamber and the rod chamber comprise a respective fluid port (112, 114), and wherein each valve assembly (110) further comprises a first fitting (116) at the first end of the fluid line, and a second fitting (118) at the second end of the fluid line, the first and second fittings being connected to the respective fluid ports of the hydraulic cylinder.

4. A mould assembly (100) according to claim 3, wherein the first fitting and the second fitting are banjo fittings.

5. A mould assembly (100) according to claims 3 or 4, wherein the first fitting further comprises a hydraulic pressure test point coupling (124) for bleeding air from the hydraulic cylinder.

6. A mould assembly (100) according to claim 5, wherein the first fitting comprises a banjo bolt (120) with an internal thread (126), and wherein the hydraulic pressure test point coupling is fastened to the first fitting via said internal thread.

7. A method of manufacturing a wind turbine blade shell part, wherein the wind turbine blade shell part is manufactured as a composite structure comprising a fibre-reinforcement material embedded in a polymer matrix, and wherein the wind turbine blade shell part is provided with a root end insert that, when manufactured, is accessible from a root end of the wind turbine shell part, and wherein the wind turbine blade shell part is manufactured with the mould assembly (100) according to any of claim 1-6, wherein the method comprises the steps of:
a) arranging the root end insert on the lowering device (85) of the mould assembly (100), and
b) lowering the root end insert onto the moulding surface of the mould using the lowering device (85).

8. A method according to claim 7, wherein the method comprises, prior to or during step b), opening the valve of each valve assembly to reset the piston position of the respective hydraulic cylinders, and subsequently closing the valves.

9. A method according to claims 7 or 8, wherein the method further comprises bleeding air from at least one of the hydraulic cylinders using the pressure test point coupling.

10. A method according to any of claims 7-9, wherein step b) is carried out in two motion steps, wherein
b1) the root end insert in a first motion step is lowered onto the moulding surface while the root end insert is angled upwards in the longitudinal direction until a first end of the root end insert contacts a part of the moulding surface at the root end, and
b2) the root end insert in a second motion step is tilted until the root end insert rests on the moulding surface.

11. A method according to any of claims 7-10, wherein the root end insert prior to step a) is arranged on a mounting plate (70), and wherein the root end insert is arranged on the lowering device (85) via the mounting plate (70).

12. A method according to any of claims 7-11, wherein the method, prior to step a), comprises the step of arranging one or more outer fibre layers on the moulding surface, the one or more outer fibre layers defining an outer surface of the wind turbine blade shell part, and wherein the method additionally comprises the step of arranging one or more inner fibre layers on top of the root end insert.

## Patentansprüche

1. Formwerkzeuganordnung (100) zum Herstellen eines Windkraftanlagenflügel-Schalenteils, wobei die Formwerkzeuganordnung (100) ein Formwerkzeug (23) mit einer Formgebungsfläche (22), die die äußere Form des Windkraftanlagenflügel-Schalenteils definiert, umfasst, wobei das Formwerkzeug eine Längsrichtung aufweist, die sich zwischen einem Spitzenende (26) und einem Wurzelende (25) des Formwerkzeugs erstreckt, wobei die Formwerkzeuganordnung (100) eine Absenkvorrichtung (85) umfasst, die dazu angepasst ist, einen Wurzelendeinsatz zu tragen und auf die Formgebungsfläche des Formwerkzeugs abzusenken, wobei die Absenkvorrichtung (85) an dem Formwerkzeug angebracht ist und ein Gestell (86) zum Tragen des Wurzelendeinsatzes umfasst, wobei die Absenkvorrichtung (85) ferner Antriebsmittel zum Absenken des Gestells zusammen mit dem Wurzelendeinsatz umfasst, wobei das Antriebsmittel zwei synchronisierte Hydraulikzylinder (91, 92) umfasst, wobei die Hydraulikzylinder jeweils eine Kolbenkammer und eine Stangenkammer umfassen, wobei die Kolbenkammer und die Stangenkammer jedes Zylinders mittels einer jeweiligen Ventilanordnung (110), die eine Fluidleitung (96) und ein Ventil (97) umfasst, miteinander verbunden sind.

2. Formwerkzeuganordnung (100) nach Anspruch 1, wobei es sich bei dem Ventil (97) um ein Zweiwegeventil, vorzugsweise eine Zweiwege-Kugelventil, handelt.

3. Formwerkzeuganordnung (100) nach Anspruch 1 oder 2, wobei die Kolbenkammer und die Stangenkammer jeweils einen jeweiligen Fluidanschluss (112, 114) umfassen und wobei die Ventilanordnungen (110) jeweils ferner eine erste Armatur (116) an dem ersten Ende der Fluidleitung und eine zweite Armatur (118) an dem zweiten Ende der Fluidleitung umfassen, wobei die erste und die zweite Armatur mit dem jeweiligen Fluidanschluss des Hydraulikzylinders verbunden sind.

4. Formwerkzeuganordnung (100) nach Anspruch 3, wobei es sich bei der ersten Armatur und der zweiten Armatur um Schwenkverschraubungen handelt.

5. Formwerkzeuganordnung (100) nach Anspruch 3 oder 4, wobei die erste Armatur ferner eine Hydraulikdruck-Prüfstellenkupplung (124) zum Ablassen von Luft aus dem Hydraulikzylinder umfasst.

6. Formwerkzeuganordnung (100) nach Anspruch 5, wobei die erste Armatur eine Hohlschraube (120) mit einem Innengewinde (126) umfasst und wobei die Hydraulikdruck-Prüfstellenkupplung mittels des Innengewindes an der ersten Armatur befestigt ist.

7. Verfahren zum Herstellen eines Windkraftanlagenflügel-Schalenteils, wobei das Windkraftanlagenflügel-Schalenteil als eine ein in einer Polymermatrix eingebettetes Faserverstärkungsmaterial umfassende Verbundstruktur hergestellt wird und wobei das Windkraftanlagenflügel-Schalenteil mit einem Wurzelendeinsatz versehen ist, der, wenn es hergestellt ist, von einem Wurzelende des Windkraftanlagen-Schalenteils aus zugänglich ist, und wobei das Windkraftanlagenflügel-Schalenteil mit der Formwerkzeuganordnung (100) nach einem der Ansprüche 1-6 hergestellt wird, wobei das Verfahren folgende Schritte umfasst:
a) Anordnen des Wurzelendeinsatzes auf der Absenkvorrichtung (85) der Formwerkzeuganordnung (100) und
b) Absenken des Wurzelendeinsatzes auf die Formgebungsfläche des Formwerkzeugs unter Verwendung der Absenkvorrichtung (85).

8. Verfahren nach Anspruch 7, wobei das Verfahren vor oder während Schritt b) das Öffnen des Ventils jeder Ventilanordnung, um die Kolbenstellung der jeweiligen Hydraulikzylinder zurückzusetzen, und das anschließende Schließen der Ventile umfasst.

9. Verfahren nach Anspruch 7 oder 8, wobei das Verfahren ferner das Ablassen von Luft aus mindestens einem der Hydraulikzylinder unter Verwendung der Druckprüfstellenkupplung umfasst.

10. Verfahren nach einem der Ansprüche 7-9, wobei Schritt b) in zwei Bewegungsschritten ausgeführt wird, wobei
b1) der Wurzelendeinsatz in einem ersten Bewegungsschritt auf die Formgebungsfläche abgesenkt wird, während der Wurzelendeinsatz in der Längsrichtung nach oben geneigt wird, bis ein erstes Ende des Wurzelendeinsatzes einen Teil der Formgebungsfläche an dem Wurzelende berührt, und
b2) der Wurzelendeinsatz in einem zweiten Bewegungsschritt gekippt wird, bis der Wurzelendeinsatz auf der Formgebungsfläche aufliegt.

11. Verfahren nach einem der Ansprüche 7-10, wobei der Wurzelendeinsatz vor Schritt a) auf einer Anbauplatte (70) angeordnet wird, und wobei der Wurzelendeinsatz mittels der Anbauplatte (70) an der Absenkvorrichtung (85) angeordnet wird.

12. Verfahren nach einem der Ansprüche 7-11, wobei das Verfahren vor Schritt a) den Schritt des Anordnens einer oder mehrerer äußerer Faserschichten auf der Formgebungsfläche umfasst, wobei die eine oder die mehreren äußeren Faserschichten eine äußere Oberfläche des Windkraftanlagenflügel-Schalenteils definieren und wobei das Verfahren ferner den Schritt des Anordnens einer oder mehrerer innerer Faserschichten zuoberst auf dem Wurzelendeinsatz umfasst.

## Revendications

1. Ensemble formant moule (100) servant à fabriquer une partie de coque de pale d'éolienne, l'ensemble formant moule (100) comportant un moule (23) ayant une surface de moulage (22) qui définit la forme extérieure de la partie de coque de pale d'éolienne, le moule ayant une direction longitudinale s'étendant entre une extrémité de bout (26) et une extrémité de pied (25) du moule, dans lequel l'ensemble formant moule (100) comporte un dispositif d'abaissement (85), qui est adapté pour porter et abaisser une pièce rapportée d'extrémité de pied sur la surface de moulage du moule, le dispositif d'abaissement (85) étant fixé au moule et comportant un cadre (86) servant à porter la pièce rapportée d'extrémité de pied, dans lequel le dispositif d'abaissement (85) comporte par ailleurs des moyens d'entraînement servant à abaisser le cadre avec la pièce rapportée d'extrémité de pied, les moyens d'entraînement comportant deux cylindres hydrauliques synchronisés (91, 92), chaque cylindre hydraulique comportant une chambre de piston et une chambre de tige, dans lequel la chambre de piston et la chambre de tige de chaque cylindre sont reliées l'une à l'autre par le biais d'un ensemble formant soupape respectif (110) comportant une conduite de fluide (96) et une soupape (97).

2. Ensemble formant moule (100) selon la revendication 1, dans lequel la soupape (97) est une soupape à deux voies, de préférence une soupape à bille à deux voies.

3. Ensemble formant moule (100) selon la revendication 1 ou la revendication 2, dans lequel la chambre de piston et la chambre de tige comportent chacune un orifice de fluide respectif (112, 114), et dans lequel chaque ensemble formant soupape (110) comporte par ailleurs un premier raccord (116) au niveau de la première extrémité de la conduite de fluide, et un deuxième raccord (118) au niveau de la deuxième extrémité de la conduite de fluide, les premier et deuxième raccords étant reliés aux orifices de fluide respectifs du cylindre hydraulique.

4. Ensemble formant moule (100) selon la revendication 3, dans lequel le premier raccord et le deuxième raccord sont des raccords banjo.

5. Ensemble formant moule (100) selon la revendication 3 ou la revendication 4, dans lequel le premier raccord comporte par ailleurs un raccord de point de mesure de pression hydraulique (124) servant à purger l'air du cylindre hydraulique.

6. Ensemble formant moule (100) selon la revendication 5, dans lequel le premier raccord comporte un boulon creux à filet femelle (120) avec un filetage interne (126), et dans lequel le raccord de point de mesure de pression hydraulique est fixé au premier raccord par le biais dudit filetage interne.

7. Procédé de fabrication d'une partie de coque de pale d'éolienne, dans lequel la partie de coque de pale d'éolienne est fabriquée sous la forme d'une structure composite comportant un matériau de renfort de fibres noyé dans une matrice polymère, et dans lequel la partie de coque de pale d'éolienne est dotée d'une pièce rapportée d'extrémité de pied qui, lors de la fabrication, est accessible à partir d'une extrémité de pied de la partie de coque d'éolienne, et dans lequel la partie de coque de pale d'éolienne est fabriquée avec l'ensemble formant moule (100) selon l'une quelconque des revendications 1 à 6, dans lequel le procédé comporte les étapes consistant à :
a) agencer la pièce rapportée d'extrémité de pied sur le dispositif d'abaissement (85) de l'ensemble formant moule (100), et
b) abaisser la pièce rapportée d'extrémité de pied sur la surface de moulage du moule à l'aide du dispositif d'abaissement (85).

8. Procédé selon la revendication 7, dans lequel le procédé comporte, avant ou pendant l'étape b), l'étape consistant à ouvrir la soupape de chaque ensemble formant soupape pour réinitialiser la position du piston des cylindres hydrauliques respectifs, et ultérieurement l'étape consistant à fermer les soupapes.

9. Procédé selon la revendication 7 ou la revendication 8, dans lequel le procédé comporte par ailleurs l'étape consistant à purger l'air d'au moins l'un des cylindres hydrauliques à l'aide du raccord de point de mesure de pression.

10. Procédé selon l'une quelconque des revendications 7 à 9, dans lequel l'étape b) est effectuée en deux étapes de mouvement, dans lequel
b1) au cours d'une première étape de mouvement, la pièce rapportée d'extrémité de pied est abaissée sur la surface de moulage alors que la pièce rapportée d'extrémité de pied est inclinée vers le haut dans la direction longitudinale jusqu'à ce qu'une première extrémité de la pièce rapportée d'extrémité de pied entre en contact avec une partie de la surface de moulage au niveau de l'extrémité de pied, et
b2) au cours d'une deuxième étape de mouvement, la pièce rapportée d'extrémité de pied est inclinée jusqu'à ce que la pièce rapportée d'extrémité de pied repose sur la surface de moulage.

11. Procédé selon l'une quelconque des revendications 7 à 10, dans lequel, avant l'étape a), la pièce rapportée d'extrémité de pied est agencée sur une plaque de montage (70), et dans lequel la pièce rapportée d'extrémité de pied est agencée sur le dispositif d'abaissement (85) par le biais de la plaque de montage (70).

12. Procédé selon l'une quelconque des revendications 7 à 11, dans lequel, avant l'étape a), le procédé comporte l'étape consistant à agencer une ou plusieurs couches extérieures de fibres sur la surface de moulage, lesdites une ou plusieurs couches extérieures de fibres définissant une surface extérieure de la partie de coque de pale d'éolienne, et dans lequel le procédé comporte en outre l'étape consistant à agencer une ou plusieurs couches intérieures de fibres par-dessus la pièce rapportée d'extrémité de pied.
